# EUROPÄISCHE PATENTANMELDUNG

(11) **EP 2 333 361 A1**
(43) Veröffentlichungstag der Anmeldung: **15.06.2011**
(21) Anmeldenummer: 10192383.7
(22) Anmeldetag: 24.11.2010
(51) Int. Cl.: F16C 11/06, F16C 23/04

(54) **Befestigung Gelenklager**

(30) Priorität: 09.12.2009 DE 102009057452
(71) Anmelder: Schaeffler Technologies GmbH & Co. KG, 91074 Herzogenaurach (DE)
(72) Erfinder: Krome, Andreas, 91097 Oberreichenbach (DE); Lehmann, Christian, 91056 Erlangen (DE)

(57) **Zusammenfassung**

Die Erfindung betrifft ein Gelenklager (1), umfassend zwei Lagerringe, nämlich einen Innenring (2) mit einer sphärisch gewölbten inneren Lagerfläche (3) und einen Außenring (4) mit einer sphärisch gewölbten äußeren Lagerfläche (5), wobei die innere (3) und äußere Lagerfläche (5) um eine Lagerachse (8) rotationssymmetrisch ausgebildet sind und wobei zumindest ein Lagerring (2, 4) in einer Anschlusskonstruktion (6, 7) aufgenommen ist, dadurch gekennzeichnet, dass der in der Anschlusskonstruktion (6, 7) aufgenommene Lagerring (2, 4) durch zumindest ein in einer senkrecht zur Lagerachse stehenden Ebene angeordnetes und mit einer Aufnahme im Lagerring und einer Aufnahme in der Anschlusskonstruktion zusammenwirkendes Befestigungselement in der Anschlusskonstruktion (6, 7) fixiert ist oder fixierbar ist

## Beschreibung

### Gebiet der Erfindung

Die Erfindung betrifft ein Gelenklager, umfassend zwei Lagerringe, nämlich einen Innenring mit einer sphärisch gewölbten inneren Lagerfläche und einen Außenring mit einer sphärisch gewölbten äußeren Lagerfläche, wobei die innere und äußere Lagerfläche um eine Lagerachse rotationssymmetrisch ausgebildet sind und wobei zumindest ein Lagerring in einer Anschlusskonstruktion aufgenommen ist. Derartige Gelenklager, z.B. Radialgelenklager, können zum gelenkigen Verbinden von Wagenkästen eines mehrgliedrigen Fahrzeuges eingesetzt werden.

### Stand der Technik

Der Innenring und der Außenring derartiger Gelenklager müssen mit jeweils einer Anschlusskonstruktion, z.B. einem Gehäuseelement, verbunden werden. Die Verbindung muss dabei derart gestaltet sein, dass sämtliche zwischen Innenring und Außenring übertragene Kräfte aufgenommen werden. Bei einem Gelenklager mit senkrechter Lagerachse, welches in vertikaler Richtung sowohl Gewichtskräfte als auch den Gewichtskräften entgegen gerichtete sogenannte Abhebekräfte (z.B. bei Wartung oder im Falle eines Unfalls des Fahrzeuges) aufnehmen kann, müssen die Verbindungen somit insbesondere Vertikalkräfte in beiden Vertikalrichtungen aufnehmen können. Aus der DE 10 2004 050 006 A1 ist ein gattungsgemäßes Gelenklager bekannt, dessen Innenring und Außenring mehrere vertikal angeordnete Gewindebohrungen aufweisen mittels denen Innenring und Außenring durch Schrauben mit einer ersten und einer zweiten Anschlusskonstruktion verschraubt werden können, so dass die Gewichtskräfte und die Abhebekräfte durch Zugbeanspruchungen der Schrauben aufgenommen werden können. Gemäß der DE 10 2004 050 006 A1 umgreifen die beiden Anschlusskonstruktion hierzu Innenring und Außenring vollständig und weisen entsprechende Bohrungen auf. Nachteilig bei der Lösung der DE 10 2004 050 006 A1 ist der große Platzbedarf in vertikaler Richtung, sowie die Tatsache dass die Montage von zwei axialen Seiten erfolgen muss.

### Aufgabe der Erfindung

Der Erfindung liegt die Aufgabe zugrunde, ein gattungsgemäßes Gelenklager bereitzustellen, das eine einfache und somit kostengünstige Montage erlaubt und welches insbesondere in axialer Richtung klein baut, um beispielsweise in Niederflurstraßenbahnen eingesetzt werden zu können.

### Zusammenfassung der Erfindung

Die Aufgabe wird durch ein Gelenklager gemäß dem unabhängigen Anspruch gelöst. Demzufolge ist ein gattungsgemäßes Gelenklager dadurch gekennzeichnet, dass der in der Anschlusskonstruktion aufgenommene Lagerring durch zumindest ein in einer senkrecht zur Lagerachse stehenden Ebene angeordnetes und mit einer Aufnahme im Lagerring und einer Aufnahme in der Anschlusskonstruktion zusammenwirkendes Befestigungselement in der Anschlusskonstruktion fixiert ist oder fixierbar ist.

Das erfindungsgemäße Gelenklager umfasst einen Innenring der gegenüber einem Außenring verdreht und verschwenkt werden kann. Hierzu weisen Innenring und Außenring komplementäre und zusammenwirkende Lagerflächen auf; z.B. kann der Innenring eine konvexe, sphärische Lagerfläche aufweisen, während der Außenring eine konkave, sphärische Lagerfläche aufweist. Das Radialgelenklager weist eine Lagerachse auf. Die Lagerflächen sind rotationssymmetrisch um die Lagerachse angeordnet.

Die Lagerflächen können bezüglich eines Drehmittelpunkts des Gelenklagers axial symmetrisch oder asymmetrisch angeordnet sein. Bei einer asymmetrischen Anordnung weist das Gelenklager eine axiale Vorzugsrichtung auf, in der eine höhere Kraft, z.B. Gewichtskraft, aufgenommen werden kann. In der anderen axialen Richtung können Abhebekräfte aufgenommen werden.

Die Erfindung zeichnet sich dadurch aus, dass anstelle von axial angeordneten Befestigungselementen wie Schrauben zumindest ein in einer senkrecht zur Lagerachse stehenden Ebene angeordnetes Befestigungselement eingesetzt wird, das mit einer entsprechenden Aufnahme im Lagerring und der Anschlusskonstruktion zusammenwirkt, um den Lagerring in der Anschlusskonstruktion zu fixieren.

Ein rotationssymmetrisches Befestigungselement (z.B. Schrauben, Bolzen, Spannhülsen) ist dann in der senkrecht zur Lagerachse stehenden Ebene angeordnet, wenn eine Rotationsachse des rotationssymmetrisches Befestigungselements in der Ebene liegt. Vorteilhaft liegen auch die Aufnahmen in der Ebene, d.h. bei rotationssymmetrischen Aufnahmen liegen deren Rotationsachsen in der Ebene.

Eine Aufnahme im Sinne der Erfindung kann dabei durch eine Bohrung, eine Nut, eine Kerbe oder ein Absatz gebildet werden.

Unter Fixieren wird erfindungsgemäß verstanden, dass der Lagerring gegenüber der Anschlusskonstruktion drehfest und verschiebefest befestigt ist.

Durch ein in einer senkrecht zur Lagerachse stehenden Ebene angeordnetes Befestigungselement wird ein äußerst kompaktes Gelenklager bezüglich des axialen Bauraumes möglich. So kann die komplette Fixierung ausschließlich über derart angeordnete Befestigungselemente erfolgen, so dass axial oberhalb und axial unterhalb des Lagerrings kein Bauraum zur Fixierung des Lagerrings benötigt wird. Ein Umgreifen des Lagerrings durch die Anschlusskonstruktion ist somit überflüssig.

Bevorzugte Ausführungsformen sind in den Unteransprüchen angegeben.

Gemäß einer Ausführungsform ist vorgesehen, dass die Lagerachse senkrecht angeordnet ist und das Befestigungselement waagrecht angeordnet ist. Die axiale Erstreckung entspricht somit der vertikalen Erstreckung.

Gemäß einer Ausführungsform ist vorgesehen, dass der in der Anschlusskonstruktion fixierte Lagerring der Außenring ist. Die Anschlusskonstruktion kann beispielsweise ein Gehäuseelement sein. Der Außenring lässt sich besonders vorteilhaft auf die erfindungsgemäße Art fixieren, da die Montage einfach von den radialen Außenseiten erfolgen kann.

Gemäß einer Ausführungsform ist vorgesehen, dass die Aufnahme im Lagerring und/oder die Aufnahme in der Anschlusskonstruktion eine Bohrung ist. Einerseits ist eine Bohrung relativ einfach einzubringen, so dass die Fertigungskosten gering bleiben. Andererseits kann durch eine oder mehrere Bohrungen auf einfache Weise ein Befestigungselement zur Fixierung auch für höhere Axialkräfte verwendet werden. Dabei handelt es sich vorzugsweise um ein zylindrisches oder rotationssymmetrisches Befestigungselement. Der oder die Bohrungsdurchmesser sowie der oder die Durchmesser der Befestigungselemente können den zu übertragenden Kräften angepasst werden. Eine Bohrung wird dabei vorzugsweise derart angeordnet, dass die Bohrung eine die Lagerachse schneidende Bohrungsachse aufweist. Die Bohrung verläuft somit radial. Denkbar sind selbstverständlich auch Bohrungen, die nicht radial verlaufen.

Gemäß einer Ausführungsform ist vorgesehen, dass die Aufnahme im Lagerring eine umlaufende Nut ist. Die Nut befindet sich auf einer äußeren Mantelfläche des Lagerrings. Vorzugsweise entspricht eine Breite der Nut (axiale Erstreckung) einem Bohrungsdurchmesser der Bohrung in der radial außerhalb liegenden Anschlusskonstruktion. Ein zylindrischer Körper als Befestigungselement welcher bei z.B. senkrecht stehender Lagerachse waagrecht durch die Bohrung geführt wird, greift in die Nut ein und verhindert formschlüssig ein Abheben des Lagerrings und beispielsweise reibschlüssig ein Drehen des Lagerrings. Eine Nut in dem Lagerring hat gegenüber einer Bohrung den Vorteil, dass für eine Montage kein Ausrichten durch Drehen von Lagerring gegenüber Anschlusskonstruktion um die Lagerachse erforderlich ist, damit eine Bohrung im Lagerring mit einer Bohrung in der Anschlusskonstruktion fluchtet.

Denkbart ist insbesondere dass die Anschlusskonstruktion eine tangential zu dem Lagerring verlaufende Bohrung aufweist und der Lagerring eine entsprechende Nut oder eine Kerbe aufweist.

Gemäß einer Ausführungsform ist vorgesehen, dass die Aufnahme im Lagerring axial zwischen Stirnseiten des Lagerrings angeordnet ist. Diese Gestaltung ist durch die waagrecht angeordneten Befestigungselemente möglich, und verdeutlicht den geringen vertikalen Bauraum.

Gemäß einer besonders bevorzugten Ausführungsform ist vorgesehen, dass das Befestigungselement eine Spannhülse ist. Eine Spannhülse ist ein hohlzylindrischer Körper, der derart geschlitzt ist (z.B. Längsschlitz), dass er unter Einwirkung von radial nach innen gerichteten Kräften in seinem Durchmesser reduziert werden kann (elastische Verformung), wobei bei Wegnahme der Kräfte die Spannhülse ihren ursprünglichen Zustand wieder einzunehmen versucht. Bei der Montage kann die Spannhülse somit im Durchmesser reduziert werden und z.B. durch eine Bohrung in der Anschlusskonstruktion und eine fluchtende Bohrung in dem Lagerring geschoben werden, so dass sich die Spannhülse über die Nahtstelle der Bohrungen in der Anschlusskonstruktion und im Lagerring erstreckt. Die Spannhülse wird im Betrieb durch Vertikalkräfte auf Scheren beansprucht.

Gemäß einer weiteren Ausführungsform ist vorgesehen, dass das Befestigungselement eine Schraube ist. Eine Schraube kann einfach montiert/demontiert werden. Möglich ist auch, dass das Befestigungselement ein Bolzen ist. Grundsätzlich eignen sich rotationssymmetrische Körper sehr gut.

Gemäß einer weiteren Ausführungsform ist vorgesehen, dass der Lagerring in der Anschlusskonstruktion durch vier Befestigungselemente fixiert ist. Sofern es sich um den Außenring handelt, der üblicherweise durch zwei kreisringsegmentförmige Ringhälften gebildet wird, kann jede Ringhälfte durch zwei Befestigungselemente fixiert werden.

Gemäß einer weiteren Ausführungsform ist vorgesehen, dass das Gelenklager zum gelenkigen Verbinden von Wagenkästen eines mehrgliedrigen Fahrzeuges eingesetzt wird.

Die Aufgabe wird erfindungsgemäß auch durch einen Lagerring eines Gelenklagers, insbesondere eines Radialgelenklagers, umfassend eine sphärische, um eine Lagerachse rotationssymmetrisch angeordnete Lagerfläche sowie eine der Lagerfläche radial gegenüberliegende Befestigungsfläche, dadurch gelöst, dass in der Befestigungsfläche zwischen einer ersten und einer zweiten Stirnseite zumindest eine Aufnahme zur Fixierung des Lagerrings in einer Anschlusskonstruktion ausgebildet ist. Diese Aufnahme wird vorzugsweise durch eine Bohrung gebildet. Vorzugsweise verläuft eine Bohrungsachse (Symmetrieachse) senkrecht oder windschief zu einer Lagerringachse; die Lagerringachse entspricht einer späteren Lagerachse im zusammengebauten Zustand. In der Bohrung kann ein zylindrischer Körper, z.B. Spannhülse, zum Befestigen eingesetzt werden.

### Kurze Beschreibung der Zeichnungen

Ausführungsbeispiele der Erfindung werden anhand der beiliegenden Figuren erläutert. Dabei zeigen:
- Figur 1: ein erfindungsgemäßes Gelenklager nach einem ersten Ausführungsbeispiel,
- Figur 2: ein erfindungsgemäßes Gelenklager nach einem zweiten Ausführungsbeispiel, und
- Figur 3: ein erfindungsgemäßes Gelenklager nach einem dritten Ausführungsbeispiel.

Gleiche oder funktionsgleiche Elemente sind in den Figuren mit gleichen Bezugszeichen versehen.

### Detaillierte Beschreibung der Zeichnungen

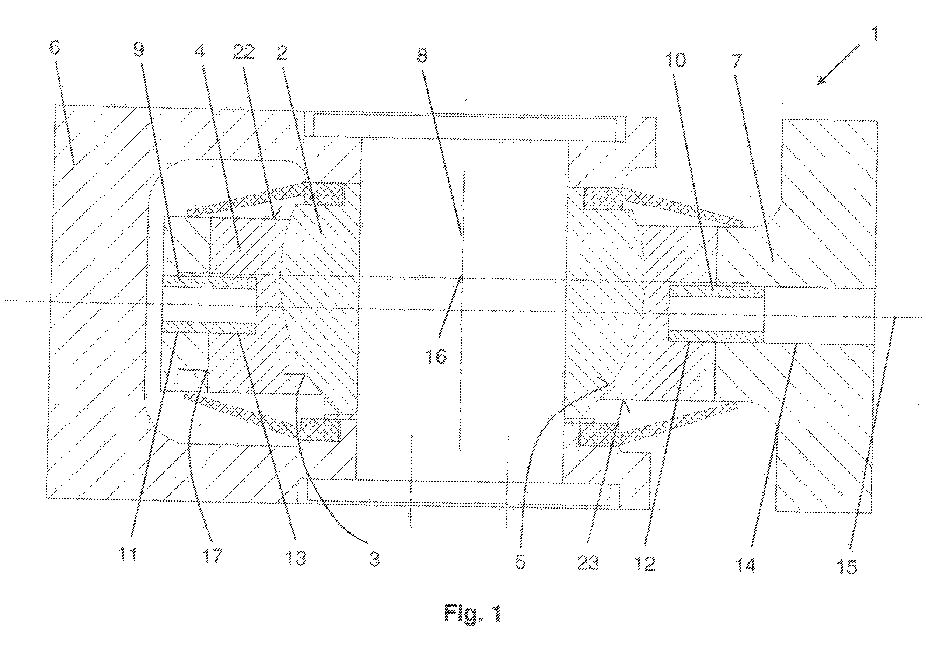

Figur 1 zeigt in einer Schnittdarstellung ein erfindungsgemäßes Gelenklager 1, umfassend einen Innenring 2 mit einer sphärisch gewölbten inneren Lagerfläche 3 und einen Außenring 4 mit einer sphärisch gewölbten äußeren Lagerfläche 5. Der Innenring 2 ist in einer ersten Anschlusskonstruktion 6 und der Außenring 4 in einer zweiten Anschlusskonstruktion 7 fixiert.

Die Fixierung des Außenrings 4 erfolgt durch bezüglich einer vertikal stehenden Lagerachse 8 waagrecht angeordneten Befestigungselementen, nämlich Spannhülsen 9, 10. Hierzu weist die zweite Anschlusskonstruktion 7 waagrechte Bohrungen 11, 12, nämlich Durchgangsbohrungen, auf, deren Durchmesser an einen Außendurchmesser der Spannhülsen 9, 10 angepasst ist, so dass sich in der Bohrung 11, 12 befindliche Spannhülsen im Betrieb nicht mehr verschieben bzw. lockern können. Weiterhin weist der Außenring 4 Bohrungen 13, 14, nämlich Sacklochbohrungen auf, deren Durchmesser dem Durchmesser der Bohrungen 11, 12 der zweiten Anschlusskonstruktion 7 entspricht. Die Tiefe der Sacklochbohrungen entspricht im Wesentlichen der halben Länge der Spannhülsen 9, 10.

Die Bohrungen 11-14 liegen waagrecht in einer Ebene 15, d.h. Bohrungsachsen liegen auf der Ebene 15. Die Ebene 15 stellt eine senkrecht zur Lagerachse 8 stehende Ebene dar. Die Ebene 15 liegt vorzugsweise vertikal auf der Hälfte der vertikalen Erstreckung des Außenrings 4, so dass eine mögliche Schwächung des Außenrings 4 minimiert wird. Da es sich um ein asymmetrisches Gelenklager 1 handelt, liegt ein Drehmittelpunkt 16 des Gelenklagers 1 außerhalb der Ebene 15. Denkbar wäre selbstverständliche auch (insbesondere bei symmetrischen Gelenklagern 1), die Bohrungen 11-14 derart zu positionieren, dass die die Bohrungsachsen aufweisende Ebene 15 den Drehmittelpunkt 16 umfasst.

Die Bohrungen 13, 14 des Außenrings 4 befinden sich auf einer Befestigungsfläche 17. Die Befestigungsfläche 17 wird durch eine der äußeren Lagerfläche 5 radial gegenüberliegenden Mantelfläche gebildet. Die zweite Anschlusskonstruktion 7 weist eine zur Befestigungsfläche 17 korrespondierende innere Mantelfläche 18 auf. Vertikalkräfte die zwischen Innenring 2 und Außenring 4 übertragen werden, werden somit ausschließlich durch die Spannhülsen 9, 10 in Form von Scherbeanspruchungen übertragen.

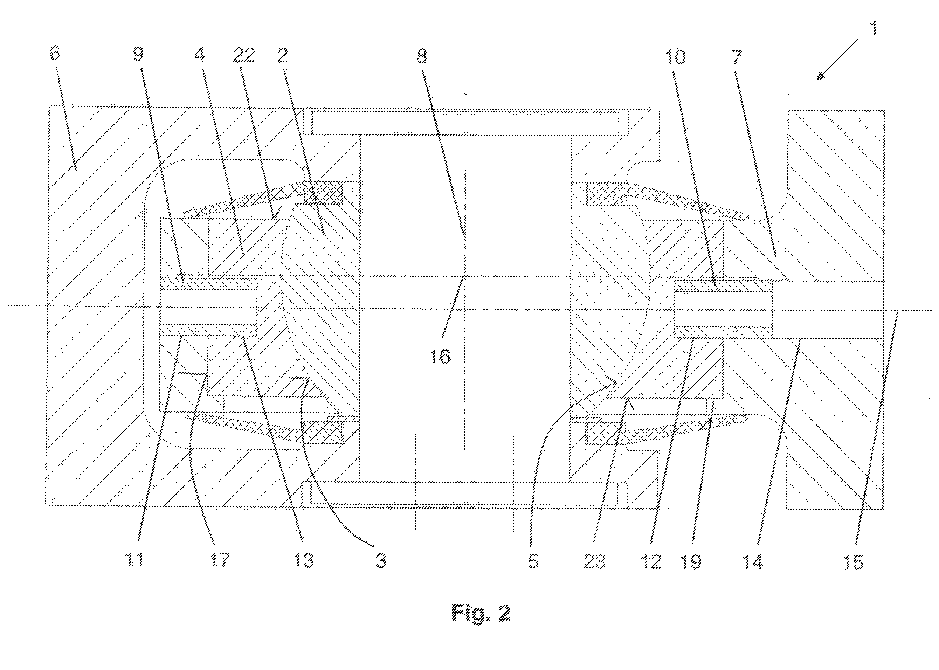

Figur 2 zeigt in einer Schnittdarstellung ein erfindungsgemäßes Gelenklager 1 gemäß einem zweiten Ausführungsbeispiel. Im Gegensatz zum ersten Ausführungsbeispiel nach Figur 1, weist die zweite Anschlusskonstruktion 7 einen Vorsprung 19 auf, um Vertikalkräfte, die nach unten gerichtet sind (z.B. Gewichtskräfte) aufnehmen zu können. Demnach werden die Spannhülsen 9, 10 bezüglich der Kraftübertragung in dieser Richtung entlastet. Die Spannhülsen 9, 10 dienen somit hauptsächlich dazu, die Abhebekräfte, also nach oben gerichtete Vertikalkräfte, aufzunehmen.

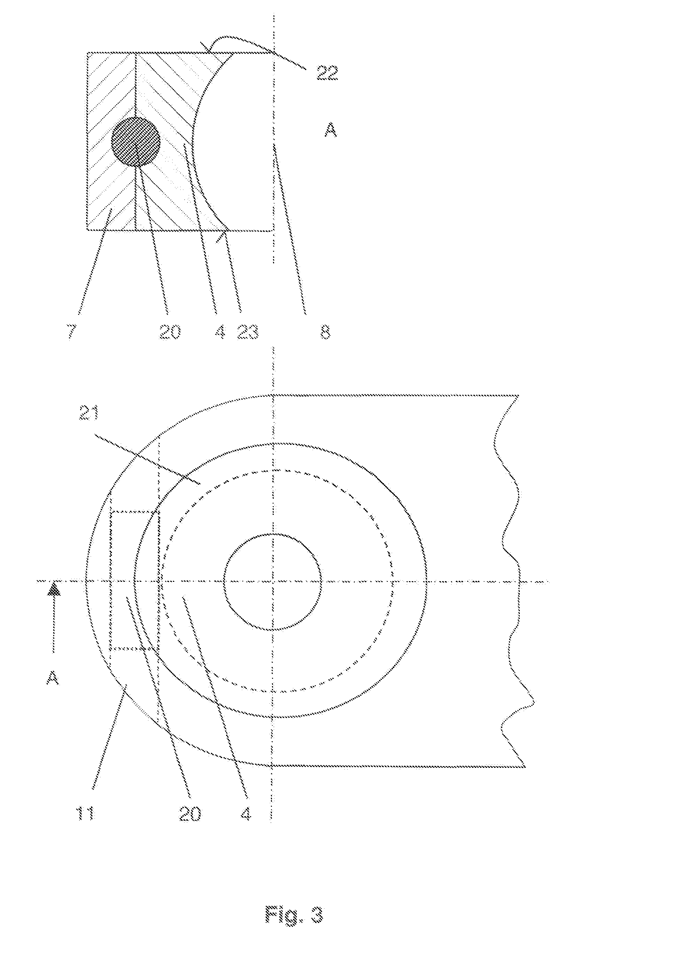

Figur 3 zeigt eine schematische Darstellung eines dritten Ausführungsbeispiels. Gemäß diesem Ausführungsbeispiel weist der Außenring 4 eine umlaufende Nut 21 auf. Die zweite Anschlusskonstruktion 7 weist eine zum Außenring 4 tangential verlaufende Bohrung 11 auf. Der Bohrungsdurchmesser der Bohrung 11 entspricht einem Durchmesser eines halbkreisförmigen Querschnittsprofils der Nut 21. In der Bohrung 11 befindet sich ein Bolzen 20. Geignet wäre gleichermaßen eine Spannhülse.

Wie in den Figuren 1, 2 und 3 zu sehen, befindet sich die Aufnahme im Lagerring axial stets zwischen Stirnseiten 22, 23.

### Bezugszeichenliste

- 1: Gelenklager
- 2: Innenring
- 3: innere Lagerfläche
- 4: Außenring
- 5: äußere Lagerfläche
- 6: erste Anschlusskonstruktion
- 7: zweite Anschlusskonstruktion
- 8: Lagerachse
- 9: Spannhülse
- 10: Spannhülse
- 11: Bohrung
- 12: Bohrung
- 13: Bohrung
- 14: Bohrung
- 15: Ebene
- 16: Mittelpunkt
- 17: Befestigungsfläche
- 18: innere Mantelfläche
- 19: Vorsprung
- 20: Bolzen
- 21: Nut
- 22: Stirnseite
- 23: Stirnseite

## Patentansprüche

1. Gelenklager (1), umfassend zwei Lagerringe, nämlich einen Innenring (2) mit einer sphärisch gewölbten inneren Lagerfläche (3) und einen Außenring (4) mit einer sphärisch gewölbten äußeren Lagerfläche (5), wobei die innere (3) und äußere Lagerfläche (5) um eine Lagerachse (8) rotationssymmetrisch ausgebildet sind und wobei zumindest ein Lagerring (2, 4) in einer Anschlusskonstruktion (6, 7) aufgenommen ist, **dadurch gekennzeichnet, dass** der in der Anschlusskonstruktion (6, 7) aufgenommene Lagerring (2, 4) durch zumindest ein in einer senkrecht zur Lagerachse stehenden Ebene angeordnetes und mit einer Aufnahme im Lagerring und einer Aufnahme in der Anschlusskonstruktion zusammenwirkendes Befestigungselement in der Anschlusskonstruktion (6, 7) fixiert ist oder fixierbar ist.

2. Gelenklager (1) nach Anspruch 1, **dadurch gekennzeichnet, dass** die Lagerachse senkrecht angeordnet ist und das Befestigungselement waagrecht angeordnet ist.

3. Gelenklager (1) nach Anspruch 1 oder 2, **dadurch gekennzeichnet, dass** der in der Anschlusskonstruktion (6, 7) fixierte Lagerring der Außenring (4) ist.

4. Gelenklager (1) nach einem der vorangegangenen Ansprüche, **dadurch gekennzeichnet, dass** die Aufnahme im Lagerring (2, 4) und/oder die Aufnahme in der Anschlusskonstruktion (6, 7) eine Bohrung (11, 12, 13, 14) ist.

5. Gelenklager (1) nach Anspruch 4, **dadurch gekennzeichnet, dass** die Bohrung eine die Lagerachse (8) schneidende oder nicht schneidende Bohrungsachse aufweist.

6. Gelenklager (1) nach einem der vorangegangenen Ansprüche, **dadurch gekennzeichnet, dass** die Aufnahme im Lagerring (2, 4) eine umlaufende Nut (21) ist.

7. Gelenklager (1) nach einem der vorangegangenen Ansprüche, **dadurch gekennzeichnet, dass** die Aufnahme im Lagerring (2, 4) axial zwischen Stirnseiten (22, 23) des Lagerrings (2, 4) angeordnet ist.

8. Gelenklager (1) nach einem der vorangegangenen Ansprüche, **dadurch gekennzeichnet, dass** das Befestigungselement eine Spannhülse (9, 10), ein Bolzen (20) oder eine Schraube ist.

9. Gelenklager (1) nach einem der vorangegangenen Ansprüche, **dadurch gekennzeichnet, dass** der Lagerring (2, 4) in der Anschlusskonstruktion (6, 7) durch vier Befestigungselemente fixiert ist.

10. Lagerring (2, 4) eines Gelenklagers (1), umfassend eine sphärische, um eine Lagerachse (8) rotationssymmetrisch angeordnete Lagerfläche (3, 5) sowie eine der Lagerfläche (3, 5) radial gegenüberliegende Befestigungsfläche (17), **dadurch gekennzeichnet, dass** in der Befestigungsfläche (17) zwischen einer ersten und einer zweiten Stirnseite zumindest eine Aufnahme zur Fixierung des Lagerrings (2, 4) in einer Anschlusskonstruktion (6, 7) ausgebildet ist.
